# EUROPÄISCHE PATENTSCHRIFT

(11) **EP 0 810 501 B1**
(45) Veröffentlichungstag und Bekanntmachung des Hinweises auf die Patenterteilung: **22.12.1999**
(21) Anmeldenummer: 97108534.5
(22) Anmeldetag: 27.05.1997
(51) Int. Cl.: G05D 16/20, B05B 7/14, B65G 53/46

(54) **Verfahren zur Bestimmung und Reduzierung des Pulsationsgrades einer pneumatischen Förderung**
Method for determining and reducing the pulsation degree for a pneumatic transport
Méthode de détermination et de réduction du degré d'oscillations dans un transport pneumatique

(30) Priorität: 29.05.1996 DE 19621576
(43) Veröffentlichungstag der Anmeldung: 03.12.1997
(73) Patentinhaber: BASF AKTIENGESELLSCHAFT, 67056 Ludwigshafen (DE)
(72) Erfinder: Biallas, Bernd, Dr., 48324 Sendenhorst (DE); Duschek, Wolfgang, Dr., 48165 Münster (DE); Rizk, Farid, Prof. Dr., 67141 Neuhofen (DE); Feindt, Hans-Jacob, Dr., 67069 Ludwigshafen (DE)
(74) Vertreter: Isenbruck, Günter, Dr.

(56) Entgegenhaltungen:
- EP-A- 0 297 463
- EP-A- 0 473 424
- EP-A- 0 686 430
- US-A- 4 296 080
- PATENT ABSTRACTS OF JAPAN vol. 011, no. 139 (C-420), 7.Mai 1987 & JP 61 278373 A (NORDSON KK), 9.Dezember 1986,
- PATENT ABSTRACTS OF JAPAN vol. 018, no. 207 (M-1592), 13.April 1994 & JP 06 009053 A (KOBE STEEL LTD), 18.Januar 1994,

## Beschreibung

Die vorliegende Erfindung bezieht sich auf Verfahren zur Bestimmung des Pulsationsgrades einer pneumatischen Förderung von pulverförmigen Feststoffen, um damit eine pulsationsarme Förderung zu erreichen.

Es ist bekannt, daß Pulverlackbeschichtungen neben guten Schutzschichtfunktionen in zunehmendem Maße auch gute dekorative Eigenschaften bei niedrigen Schichtdicken aufweisen müssen. Zusätzlich muß ein hoher Wirkungsgrad der Sprühorgane bei der Auftragung gewährleistet sein.

Um diesem Anforderungsprofil gerecht werden zu können, muß eine gleichmäßige Förderung der pulverförmigen Feststoffe von einem Vorratsbehälter zu einem Sprühorgan gewährleistet sein, damit die pulverförmigen Feststoffe pulsationsfrei auf das Beschichtungsobjekt versprüht werden und demzufolge eine gleichmäßige Pulverlackschicht mit konstanter Schichtdicke erzeugt wird.

Aus der EP-A 0 279 463 ist ein Verfahren gemäß dem Oberbegriff von Anspruch 1 zur pneumatischen Förderung von gasgeführten pulverförmigen Feststoffen in einer Leitung bekannt. Bei diesem Verfahren wird die mit einer Zeitkonstante von vorzugsweise unter 0,01 s ermittelte Druckamplitude zusammen mit dem gemessenen Massendurchsatz unmittelbar zur Regelung des Massendurchsatzes herangezogen.

Aus den Patent Abstracts of Japan Vol. 011, No 139 (C-420) und aus der JP-A 61 278 373 ist ein Verfahren bekannt, mit dem Änderungen im Massendurchsatz einer Flüssigkeits-Sprühpistole erkannt werden können. Hierzu wird periodisch der Einspritzdruck der Düse der Sprühpistole ermittelt und mit einem Referenzwert verglichen. Bei Abweichungen über eine bestimmte Toleranzschwelle hinaus wird ein Alarm ausgelöst.

In der industriellen Beschichtungspraxis erfolgt die Förderung von pulverförmigen Feststoffen durch eine starre oder flexible Förderleitung. Je nachdem wie die Parameter in der Förderung eingestellt werden, kommt es zu mehr oder weniger ausgeprägten Pulsationen, die die Gleichmäßigkeit der Lackschicht beeinflussen.

So wird die Intensität der Pulsation einer pneumatischen Förderung bei vorgegebener Geometrie im wesentlichen durch die Höhe des Förderluftvolumenstroms und damit durch die Gasgeschwindigkeit in der Förderleitung bestimmt, d.h. sowohl die Einstellung unterschiedlicher Höhen des Förderluftvolumenstroms als auch die Veränderung des Strömungswiderstands in der flexiblen Förderleitung durch zusätzliche Bögen und Umlenkungen, die während des Sprühvorgangs auftreten, haben einen maßgeblichen Einfluß auf die Intensität der Pulsation. Darüber hinaus kann durch eine Veränderung der Partikelgrößenverteilung und/oder des mittleren Korndurchmessers der zu fördernden pulverförmigen Feststoffe eine pulsationsarme in eine pulsationsreiche Förderung umschlagen. Um eine definierte gleichmäßige Produktförderung zu erreichen, ist es im übrigen notwendig eine Mindestmenge an Förderluft pro Zeiteinheit durch die Förderleitung zu führen.

Wie aus dem Lehr- und Übungsbuch "Pneumatic Conveying of Solids; Markus et. al; Chapman and Hall Verlag" ersichtlich, hat es nicht an Versuchen gefehlt, das Förderverhalten von pneumatischen Förderungen durch vielfältige Korrelationen der typischen Förderparameter wie z. B. Druckverlust pro Längeneinheit, Gasgeschwindigkeit und Feststoffstrom zu beschreiben, um die Mechanismen der Pulsation zu verstehen und Konzepte zur Reduzierung der Pulsation erarbeiten zu können. Da diese Korrelationen auf Messungen basieren, die über einen bestimmten Längenabschnitt der Förderleitung gemittelt bzw. längenintegriert sind, ist eine Quantifizierung von Schwankungen des Pulsationsgrades in der Förderleitung nur begrenzt möglich.

Somit blieb bisher nur eine Abschätzung der Gleichmäßigkeit der Förderung durch eine visuelle Beurteilung des Sprühkegels des Sprühorgans und/oder durch eine Schichtdickenmessung des Lacks auf dem Werkstück. Diese Verfahrensweise läßt aber eine vorzugsweise automatisierte Regelung zur Reduzierung der Pulsation oder ein frühzeitiges Erkennen von sich anbahnenden Störungen bzw. eine Änderung des Förderzustands zur Verhinderung von Produktveränderungen nicht zu.

Es stellt sich deshalb die Aufgabe, Verfahren zur numerischen Quantifizierung der Pulsation einer pneumatischen Förderung zu entwickeln, um damit eine vorzugsweise automatisierte Minimierung der Pulsation bei einer pneumatischen Förderung von pulverförmigen Feststoffen zu ermöglichen.

Die Aufgabe wird erfindungsgemäß mit dem im Anspruch 1 angegebenen Verfahren dadurch gelöst, daß zur Quantifizierung der Pulsation deren RMS-Wert (Root Mean Square, Standardabweichung), im weiteren als Pulsationsgrad bezeichnet, bestimmt wird, indem die Druckamplitude punktuell an wenigstens einer Stelle in der Förderleitung gemessen wird. Dieser so bestimmte Pulsationsgrad kann zur Anzeige und Steuerung bzw. Regelung des Verfahrens, insbesondere des Förderzustandes herangezogen werden.

Darüber hinaus liegt eine weitere vorteilhafte Ausführungsform der vorliegenden Erfindung darin, eine Reduktion der Pulsation einer pneumatischen Förderung von pulverförmigen Feststoffen dadurch zu erreichen, daß der Pulsationsgrad, der wie oben beschrieben bestimmt wird, als Regelgröße für eine oder mehrere prozessuale Stellgrößen verwendet wird. Vorteilhafterweise werden als Stellgrößen der Gasvolumenstrom bzw. die Gasgeschwindigkeit und/oder der Feststoffstrom in der Förderleitung eingesetzt.

In einer anderen noch vorteilhafteren Ausführungsform wird der Pulsationsgrad so geregelt, d.h. die Stellgrößen so gesteuert bzw. geregelt, daß der Feststoffstrom konstant bleibt.

Besonders vorteilhaft läßt sich das erfindungsgemäße Verfahren zur Reduktion der Pulsation einer pneumatischen Förderung bei der Herstellung einer gleichmäßigen Pulverlackbeschichtung einsetzen, indem der pulverförmige Feststoff von dem Vorratsbehälter zu dem Sprühorgan erfindungsgemäß pulsationsarm gefördert und dann dort pulsationsarm auf das Beschichtungsobjekt gesprüht wird.

Das Verfahren zur Herstellung von gleichmäßigen Pulverlackbeschichtungen wird besonders vorteilhaft, wenn eine oder mehrere der folgenden Bedingungen erfüllt sind: Eine Froudezahl von 15 bis 46, eine Gutbeladung des Gasstroms von 2 bis 4, ein mittlerer Durchmesser der Feststoffpartikel von 2 bis 150 µm. Die Froudezahl ist allgemein definiert als Quotient des Quadrats der Gasgeschwindigkeit in einem zylindrischen Rohr und des Produkts aus der Gravitationskonstante und dem Durchmesser des zylindrischen Rohrs. Die Gutbeladung ist definiert als der Quotient aus pro Zeiteinheit geförderter Feststoffmenge (in kg) und pro Zeiteinheit gefördertem Trägermedium (Fördergasmenge) (in kg), in dem die Feststoffmenge transportiert wird.

Zur Bestimmung der Druckamplitude und des Pulsationsgrades können handelsübliche Instrumente eingesetzt werden.

Mit den erfindungsgemäßen Verfahren lassen sich folgende Vorteile erzielen:
- Der Pulsationsgrad in der Förderleitung läßt sich mit einer, ohne großen apparativen Aufwand verfügbaren Meßgröße numerisch quantifizieren.
- Mit dem so vorliegen Pulsationsgrad kann eine sich anbahnende Veränderung des Förderzustands erkannt und ausgeregelt werden.
- Es können gleichmäßige Beschichtungen mit einer geringen Schichtdickenschwankung erzielt werden.

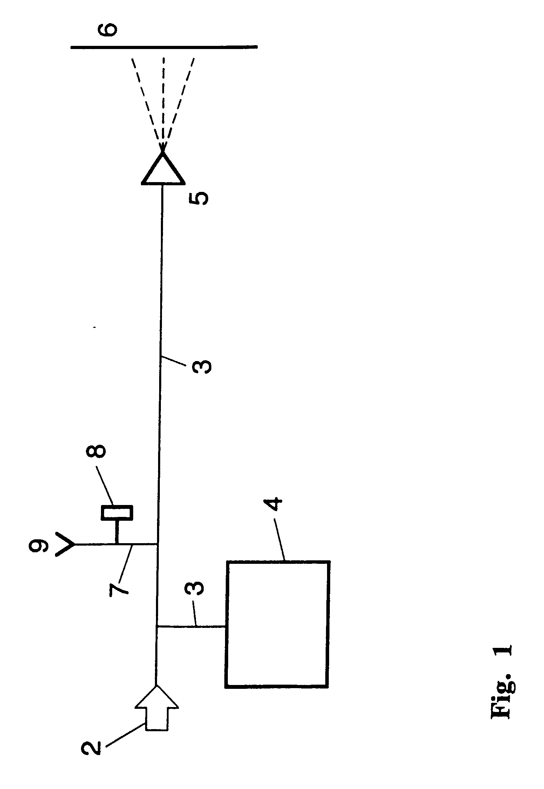

Eine vorteilhafte Ausführung des erfindungsgemäßen Verfahrens zur Bestimmung des Pulsationsgrads einer pneumatischen Förderung von pulverförmigen Feststoffen ist in Fig. 1 dargestellt. Der pulverförmige Feststoff wird mit der Förderluft (2) durch eine Förderleitung (3) von dem Pulvervorratsbehälter (4) zu dem Sprühorgan (5), in diesem Fall eine Düse, transportiert und dort auf das Beschichtungsobjekt (6) versprüht. In einem senkrecht an die Förderleitung angebrachten Stutzen (7) befindet sich ein handelsüblicher Druckaufnehmer (8), mit dem die Druckamplitude lokal gemessen wird. Der Pulsationsgrad entspricht dem RMS-Wert der Druckamplitude. Um fehlerhafte Messungen des Druckaufnehmers zu vermeiden, wird der Stutzen mit einem Spülgas (9) kontinuierlich von Ablagerungen freigehalten.

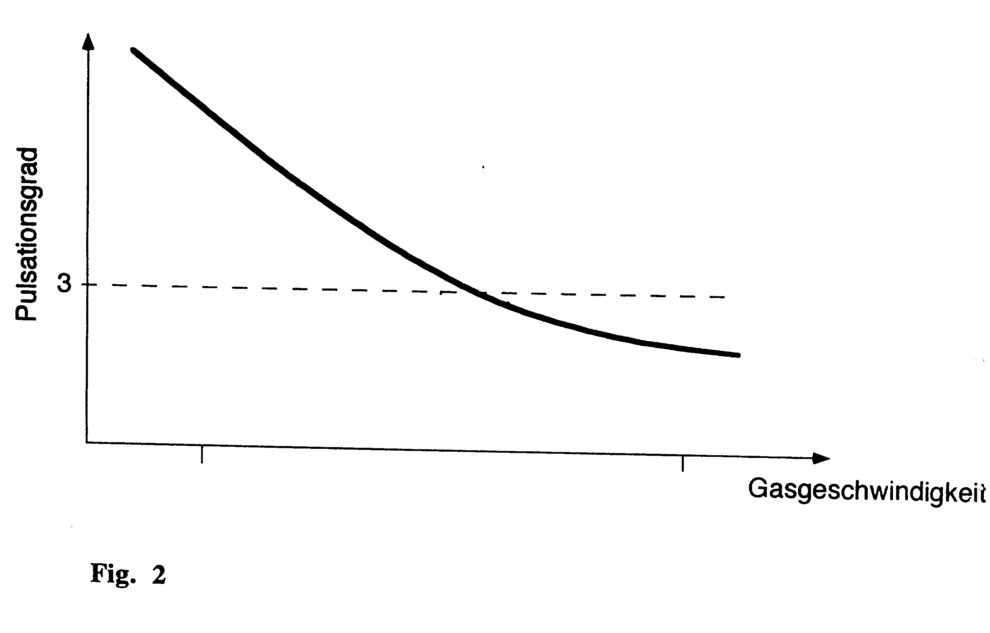

In Fig. 2 wird verdeutlicht, wie der gemessene Pulsationsgrad zur Charakterisierung des Förderzustands einer pneumatischen Förderung von pulverförmigen Feststoffen herangezogen werden kann. Aufgetragen sind der mit dem beschriebenen Meßverfahren erhaltene Pulsationsgrad über der Gasgeschwindigkeit.

Ein zu hoher Pulsationsgrad der Förderung bewirkt eine pulsierende Sprühwolke und damit eine inhomogene Schichtdicke. Ein geringer Pulsationsgrad ermöglicht eine quasihomogene bis homogene Sprühwolke und dementsprechend eine homogene, gleichmäßige Schichtdicke auf dem Beschichtungsobjekt. Ergebnisse, die den Anforderungen der Praxis in der Regel genügen, werden bei Pulsationsgraden unter 3 erzielt.

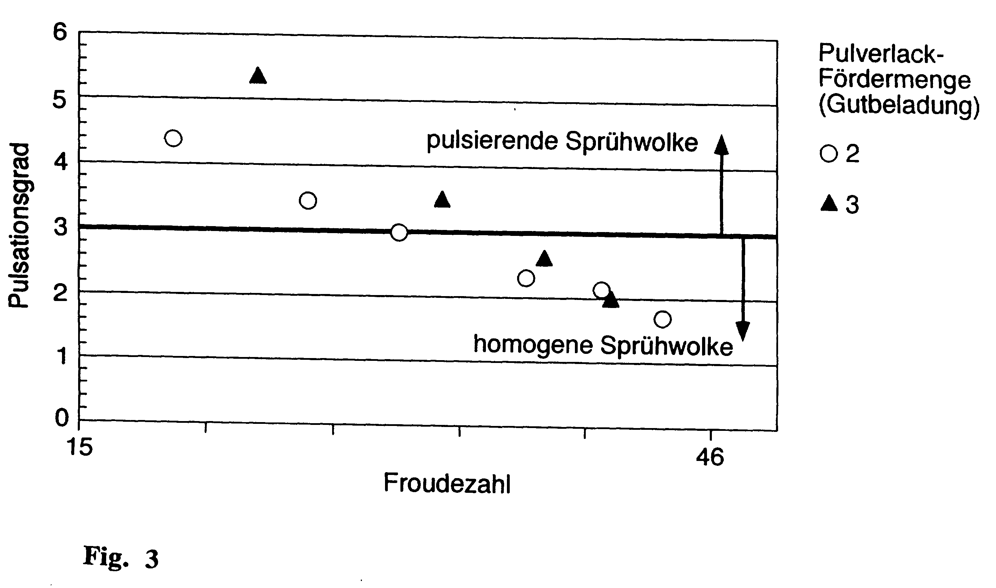

In Fig. 3 ist die Abhängigkeit des Pulsationsgrads von der Gasgeschwindigkeit, ausgedrückt als Froudezahl, in der Förderleitung bei unterschiedlichem Strom an Feststoffteilchen, ausgedrückt als Gutbeladung, dargestellt. Es wird deutlich, daß bei derselben Gasgeschwindigkeit ein höherer Feststoffstrom eine höhere Pulsation in der Förderleitung zur Folge hat. Erst bei einer Froudezahl von 33 bei einer Gutbeladung von 3 bzw. einer Froudezahl von 30, bei einer Gutbeladung von 2 wird ein Pulsationsgrad ≤ 3 erreicht, woraus eine pulsationsarme Förderung und damit eine hinreichend homogene Sprühwolke resultiert.

Fig. 3 lassen sich ferner mögliche Regelkonzepte zur Minimierung der Pulsation entnehmen. Sowohl durch eine Absenkung des Feststoffstromes als auch durch eine Erhöhung der Gasgeschwindigkeit gelangt man von einer pulsationsreichen zu einer pulsationsarmen Förderung. Vorzugsweise wird jedoch der Feststoffstrom konstant gelassen und nur die Gasgeschwindigkeit bzw. der Gasvolumenstrom über die Pulsationsgradmessung angepaßt.

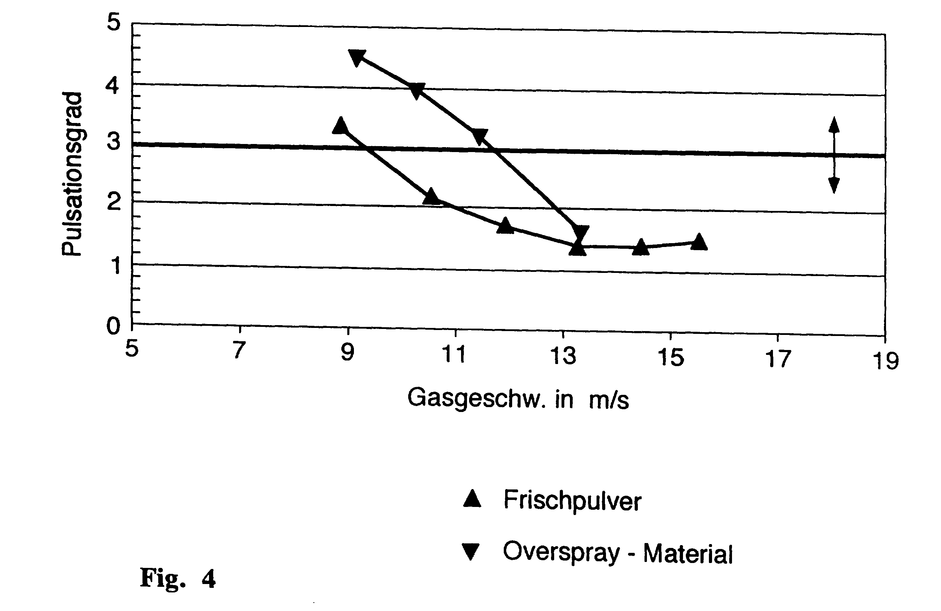

In Fig. 4 wird der Einfluß der Korngrößenverteilung des pulverförmigen Feststoffs auf den Pulsationsgrad für verschiedene Gasgeschwindigkeiten dargestellt. In der Praxis der Pulverlackierung kommt es häufig vor, daß durch eine Rückführung der nicht auf dem Beschichtungsobjekt haftenden pulverförmigen Feststoffe, dem sogenannten Overspray, der Feinanteil der zu fördernden pulverförmigen Feststoffe in der Förderleitung sich erhöht. Dadurch steigt der Pulsationsgrad und aus einer vormals pulsationsarmen wird eine pulsationsreiche Förderung und die Lackschicht auf dem Beschichtungsobjekt wird inhomogen.

Durch die Einstellung des Pulsationsgrades ≤ 3 mittels einer entsprechenden Regelung der Fördergasgeschwindigkeit oder anderer Stellgrößen gelingt es trotz eines schwankenden Feinanteils homogen zu lackieren.

## Patentansprüche

1. Verfahren zur pneumatischen Förderung von in Gas geführten pulverförmigen Feststoffen in einer Leitung, bei dem die Druckamplitude punktuell an wenigstens einer Stelle in der Leitung gemessen wird, **dadurch gekennzeichnet, daß** der Pulsationsgrad (RMS-Wert) der Druckamplitude ermittelt wird und ein diesem Pulsationsgrad zugeordnetes Signal zur Anzeige oder zur Steuerung bzw. Regelung des Verfahrens eingesetzt wird.

2. Verfahren nach Anspruch 1, dadurch gekennzeichnet, daß der Pulsationsgrad als Kriterium zur Charakterisierung des Förderzustands der pneumatischen Förderung herangezogen wird.

3. Verfahren nach Anspruch 1, dadurch gekennzeichnet, daß der Pulsationsgrad als Regelgröße für die prozessualen Stellgrößen derart verwendet wird, daß der Pulsationsgrad unter einem gegebenen Maximalwert gehalten wird.

4. Verfahren nach Anspruch 3, dadurch gekennzeichnet, daß als prozessuale Stellgrößen der Gasvolumenstrom (m³/s) die Gasgeschwindigkeit (m/s) und/oder der pulverförmige Feststoffstrom (g/min) eingesetzt wird bzw. werden.

5. Verfahren nach Anspruch 4, dadurch gekennzeichnet, daß die Stellgrößen derart geregelt werden, daß der pulverförmige Feststoffstrom konstant bleibt.

6. Verfahren nach einem der vorhergehenden Ansprüche, dadurch gekennzeichnet, daß der Pulsationsgrad konstant auf einen Wert ≤ 3 gehalten wird.

7. Verfahren nach einem der vorhergehenden Ansprüche, dadurch gekennzeichnet, daß als Feststoff ein Pulverlackmaterial zur Herstellung einer gleichmäßigen Beschichtung einer Pulverlackierung eingesetzt wird.

8. Verfahren nach Anspruch 7, dadurch gekennzeichnet, daß die Froudezahlen zwischen 15 und 46, die Gutbeladungen zwischen 2 und 4 und, vorzugsweise, der mittlere Partikeldurchmesser zwischen 2 und 150 µm betragen.

## Claims

1. A process for pneumatic conveying of pulverulent solids, conducted in a gas within a line, in which the pressure amplitude is measured locally at at least one point in the line, wherein the degree of pulsation (RMS) of the pressure amplitude is determined and a signal assigned to this degree of pulsation is used to display or to control or regulate the process.

2. A process as claimed in claim 1, wherein the degree of pulsation is employed as a criterion for characterizing the conveying state of the pneumatic conveyor.

3. A process as claimed in claim 1, wherein the degree of pulsation is used as a regulating variable for the process parameters in such a way that the degree of pulsation is kept below a given maximum level.

4. A process as claimed in claim 3, wherein the process parameter(s) employed is (are) the gas volume flow (m³/s), the gas rate (m/s) and/or the pulverulent solids flow (g/min).

5. A process as claimed in claim 4, wherein the parameters are regulated such that the pulverulent solids flow remains constant.

6. A process as claimed in one of the preceding claims, wherein the degree of pulsation is held constant at a level ≤ 3.

7. A process as claimed in any one of the preceding claims, wherein the solid employed is a powder coating material for producing a uniform powder coating.

8. A process as claimed in claim 7, wherein the Froude numbers are between 15 and 46, the loadings are between 2 and 4 and, preferably, the mean particle diameter is between 2 and 150 µm.

## Revendications

1. Méthode de transport pneumatique de matières solides pulvérulentes guidées par un gaz dans un conduit dans lequel l'amplitude de la pression est mesurée de manière ponctuelle à au moins un endroit du conduit, caractérisée en ce que le degré de pulsations (valeur quadratique moyenne) de l'amplitude de pression est déterminé et un signal subordonné au degré de pulsations est appliqué pour l'affichage ou pour le contrôle ou encore pour la gestion de la méthode.

2. Méthode selon la revendication 1, caractérisée en ce que le degré de pulsations est utilisé comme critère pour caractériser l'état du transport pneumatique.

3. Méthode selon la revendication 1, caractérisée en ce que le degré de pulsations est utilisé comme valeur de commande pour les variables d'ajustement du processus de telle manière que le degré de pulsations soit maintenu en dessous d'une valeur maximale donnée.

4. Méthode selon la revendication 3, caractérisée en ce que le débit du gaz (m³/s), la vitesse du gaz (m/s) et / ou l'écoulement de la matière solide pulvérulente (g/min) sont utilisés comme variables d'ajustement.

5. Méthode selon la revendication 4, caractérisée en ce que les variables d'ajustement sont réglées de telle manière que l'écoulement de la matière solide pulvérulente reste constant.

6. Méthode selon une des revendications précédente, caractérisée en ce que le degré de pulsations est maintenu constant à une valeur ≤ 3.

7. Méthode selon une des revendications précédente, caractérisée en ce qu'une matière de laque en poudre est utilisée comme matière solide pour la réalisation d'un revêtement uniforme de laque en poudre.

8. Méthode selon la revendication 7, caractérisée en ce que les indices de Froude se situent entre 15 et 46, les charges de matière entre 2 et 4 et le diamètre moyen des particules, de préférence, entre 2 et 150 µm.
